# DEMANDE DE BREVET EUROPEEN

(11) **EP 0 545 763 A1**
(43) Date de publication de la demande: **09.06.1993**
(21) Numéro de dépôt: 92403126.3
(22) Date de dépôt: 20.11.1992
(51) Int. Cl.: G06K 11/18

(54) **Organe de commande manuelle à distance**

(30) Priorité: 29.11.1991 FR 9114817
(71) Demandeur: THOMSON-CSF, 75008 Paris (FR)
(72) Inventeur: Chamaillard, Guy, F-92420 Courbevoie Cédex (FR)
(74) Mandataire: Benoit, Monique

(57) **Abrégé**

L'organe de commande manuelle selon l'invention est constitué d'une boule roulante (2) logée en partie dans un manche (1). Des circuits de détections des mouvements de la boule roulante (2) sont disposés à l'intérieur du manche (1). La boule roulante peut avoir des mouvements de rotation et être cliquée.

Application : Commandes à distance de systèmes mobiles.

## Description

La présente invention concerne un organe de commande manuelle.

Elle s'applique notamment à la commande de système asservis. Plus généralement, elle s'applique aux systèmes nécessitant l'intervention d'un opérateur pour commander à distance les mouvements d'une ou plusieurs parties mobiles.

Actuellement deux types de commande manuelle sont généralement utilisés. Les commandes directes génèrent une consigne, une vitesse par exemple, directement suivant l'action de l'opérateur. Les leviers et les manches fixes munis de jauges de contrainte font partie de cette première catégorie. Ils sont utilisés pour commander des systèmes mobiles de plus ou moins grande envergure à partir de consoles déportables par exemple. Les commandes indirectes génèrent un positionnement d'un symbole sur un écran, représentatif d'un positionnement d'un mobile selon deux axes. Après validation par l'opérateur, la position est ralliée par le mobile sans intervention de l'opérateur. Les leviers, et mêmes les souris permettent ce type de commande, notamment dans les unités d'acquisition ou les centres de commandement, où ces organes de commande sont aussi utilisables pour saisir des données, désigner ou définir des zones d'écran représentant des zones de tir par exemple. Toutes ces commandes, d'un usage répandu, ont néanmoins certains inconvénients. Ainsi les commandes à levier nécessitent un appui stable, et sont donc mal adaptés aux commandes situées sur des plate-formes mobile par exemple, où elles provoquent des mouvements parasites des organes commandés. Les commandes à manche fixe équipé d'une ou plusieurs jauges de contraintes bénéficient de l'appui apporté par le manche fixe. Cependant, elles sont peu précises et nécessitent une longue période d'apprentissage de la part des opérateurs. Par ailleurs elles demandent une mise au point difficile.

Le but de l'invention est de pallier les inconvénients précités.

A cet effet, l'invention a pour objet un organe de commande manuelle à distance, caractérisé en ce qu'il est constitué au moins d'une boule roulante logée en partie dans un manche contenant des moyens de détection des mouvements de la boule roulante.

L'invention a pour principaux avantages qu'elle permet l'amélioration des performances en dynamique et précision de commande, qu'elle permet une simplification des manipulations de menus, saisies de données et définitions de zones sur un écran ou équivalent, qu'elle réduit les quantités de matériels de commande nécessaire, notamment en supprimant les claviers, enfin qu'elle est simple d'emploi et ne nécessite pas de période d'apprentissage, grâce à ses qualité ergonomiques.

D'autres caractéristiques et avantages apparaîtront à l'aide de la description qui suit faite en regard des dessins annexés qui représentent :
- la figure 1, une vue en perspective d'une réalisation possible d'un organe de commande selon l'invention ;
- la figure 2a, un mode de réalisation possible d'un dispositif de détection des mouvements de rotation d'une boule roulante ;
- la figure 2b, un mode de réalisation possible d'un dispositif de maintien de la boule roulante dans un manche ;

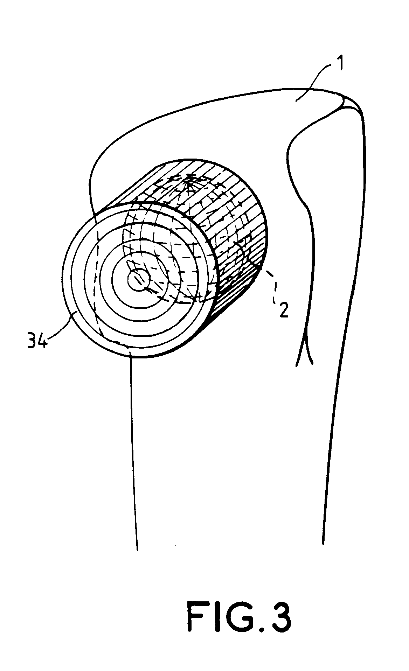

- la figure 3, une vue en perspective d'un organe de commande selon l'invention équipé d'une protection.

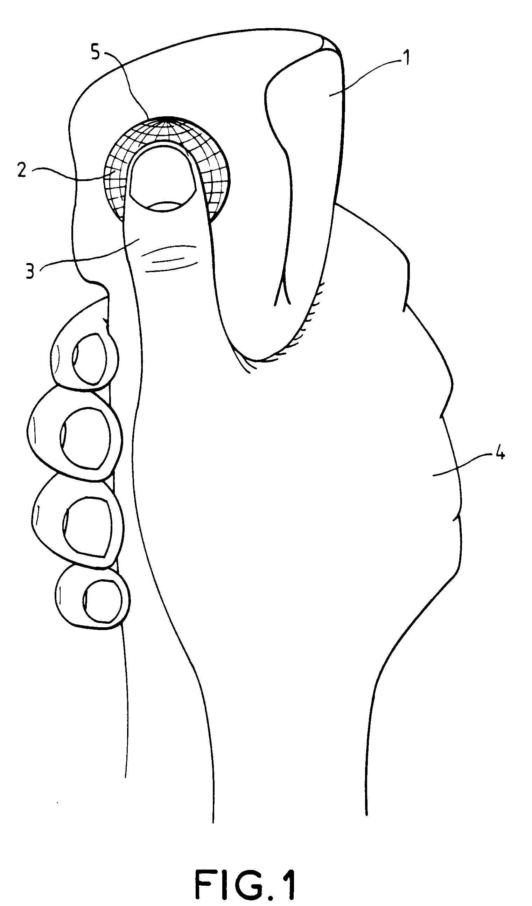

La figure 1, présente une vue en perspective d'une réalisation possible d'un organe de commande selon l'invention. Il est constitué d'un manche 1, susceptible de prendre toutes les positions, fixe ou mobile, équipé d'une boule roulante 2 logée en partie dans une cavité 5 du manche 1. Pour des raisons pratiques, cette cavité se situe de préférence dans la partie haute du manche 1. La forme du manche 1 peut par exemple être moulée suivant les formes d'une main 4 afin d'augmenter son ergonomie. La boule roulante 2 a un mouvement de rotation à l'intérieur de la cavité 5, ce mouvement est animé par exemple par le pouce 3 de la main 4. Les mouvements de rotation de la boule roulante 2 peuvent commander les déplacements d'un système mobile. Si de plus, le manche 1 est mobile, à cette première commande, se superpose une deuxième commande définie par les mouvements du manche 1. Cette solution peut être adaptée dans un cas où le manche 1 commande des mouvements de grande amplitude alors que la boule 2 commande des mouvements plus précis (d'un même mobile ou d'un mobile différent), asservis par exemple à ses rotations. Dans le cas où un appui est nécessaire, le manche 1 reste fixe et seule la boule roulante 2 sert à la commande. Il convient de remarquer que les possibilités naturelles de mouvement du pouce 3 sont plus importantes horizontalement que verticalement et sont donc bien adaptées avec les impératifs d'une ligne de visée par exemple, où l'angle en gisement est plus important que l'angle en site.

Selon l'invention, aux mouvements de rotations de la boule roulante 2 peut s'ajouter la possibilité pour l'opérateur de cliquer la boule roulante 2 par pression du pouce 3 sur celle-ci.

Les commandes offertes par l'organe selon l'invention sont multiples. Elles peuvent être différentes en fonction de l'action en cours et des modes de fonctionnement successifs par exemple. Ces commandes peuvent être de type direct ou indirect.

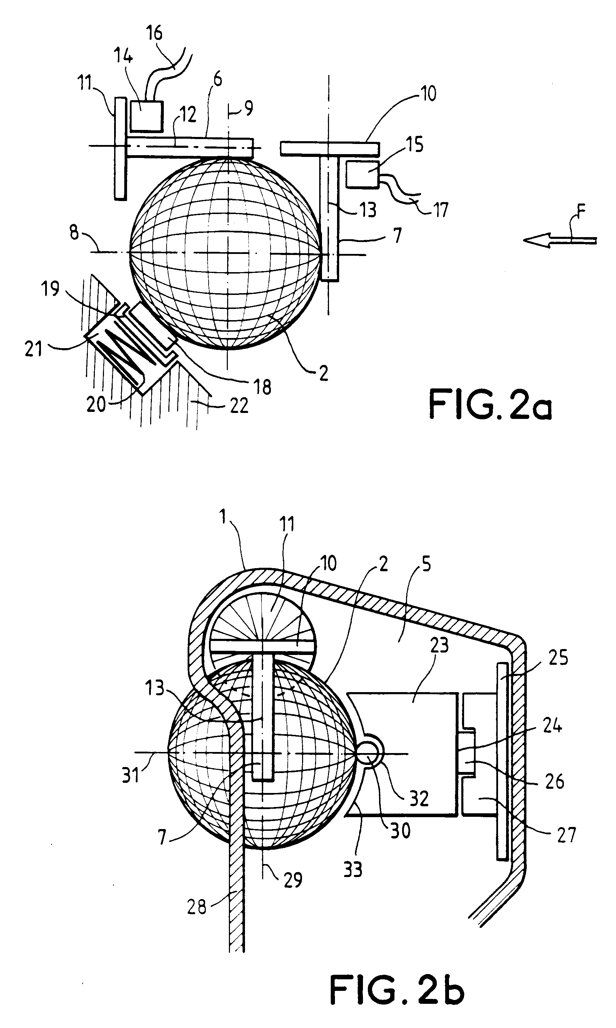

La figure 2a, présente un mode de réalisation possible d'un dispositif de détection des mouvements de rotation de la boule roulante 2. Ce dispositif est placé à l'intérieur du manche 1. La boule roulante 2 est constituée par exemple d'un noyau métallique, notamment dans le cas du maintien magnétique de celle-ci, recouvert d'un revêtement en caoutchouc ou élastomère. La boule roulante 2 peut avoir un diamètre d'environ 30mm par exemple.

Sur la figure 2a, la boule roulante 2 est représentée de manière à être vue par l'opérateur, sa face représentée étant en contact avec le pouce de celui-ci.

Les mouvements de rotation de la boule roulante 2 sont captés par des cylindres 6 et 7 disposés de telles façon que leurs axes de symétrie 12 et 13 soient perpendiculaires et situés dans le plan formé par les deux axes de rotation 8 et 9 de la boule roulante 2. Ils peuvent avoir des diamètre d'environ 3 à 5mm par exemple. La rotation de chaque cylindre 6, 7 est transmise, soit par leur axe, soit par entraînement périphérique, à une roue codeuse 10, 11 munie de secteurs réfléchissant par exemple. Des éléments 14, 15 reliés par des lignes de transmission 16, 17, des fibres optiques par exemple, à des circuits de traitement émettent des signaux optiques vers les roues codeuses 10, 11 et captent des signaux réfléchis par celles-ci. Les signaux réfléchis étant différents d'un secteur à l'autre, en particulier si la roue codeuse est recouverte d'une succession de secteurs réfléchissants et non réfléchissants par exemple, les éléments 14, 15 peuvent effectuer un comptage optique des secteurs en rotation et transmettre via les lignes de transmission 16, 17 les informations de rotation de la boule roulante 2 à un circuit de traitement. Au lieu d'être recouvertes de secteurs réfléchissants et non réfléchissants, les roues codeuses 10, 11 auraient pu être ajourées. Cependant cette solution nécessite un dispositif d'émission de signaux lumineux et ses circuits électroniques associés du côté de la face opposé aux capteurs optiques, ce qui augmente le volume du dispositif de détection et complique la mise en oeuvre de ce dispositif. Le système de détection optique présenté par la figure 2a peut être remplacé par un système de détection magnétique par exemple, les roues codeuses 10, 11 étant alors recouvertes de secteurs à propriétés magnétiques différentes. Il est aussi possible d'envisager un système de détection des mouvements de rotation de la boule roulante 2 par frottement, en particulier grâce à l'utilisation de balais de contacts.

Un troisième cylindre 18, logé sur un plateau 19 et maintenu par les bords du plateau 19, maintient la boule roulante 2 en contact avec les cylindres 6, 7 grâce à un ressort 20. Ce ressort 20 est logé dans une cavité 21 creusée dans la structure 22 du manche représentée par hachures sur la figure 2a. Il exerce une pression sur la boule roulante par l'intermédiaire du plateau 19 et du cylindre 18.

La figure 2b présente un mode de réalisation possible d'un dispositif de maintien de la boule roulante 2 à l'intérieur de la cavité 5 du manche 1.

Sur cette figure, la boule roulante 2 est vue suivant la direction indiquée par la flèche F de la figure 2a. Les roues codeuses 10, 11 et le cylindre 13 sont représentés. La partie hachurée 28 représente l'épaisseur du corps du manche 1 dans cette partie du manche 1 contenant la boule roulante 2, le dispositif de détection, un dispositif de maintien de la boule et des circuits de traitement.

Le maintien de la boule roulante 2 est réalisé grâce à une force de maintien selon un axe 31 perpendiculaire aux axes de rotations 8, 9 précédemment définis. L'âme de la boule roulante 2 étant métallique, cette force de maintien peut être crée par un aimant 23 maintenu dans le fond de la cavité 5. Une cuvette 32 ménagée dans l'aimant 23, revêtue par exemple d'un matériau à faible coefficient de frottement, reçoit une bille 30, en acier par exemple, qui est en contact avec la boule roulante 2, autorisant ainsi la rotation de celle-ci. La bille 30 peut par exemple avoir un diamètre d'environ 3 à 5mm. L'aimant 23 peut avoir une face sphérique afin d'accueillir la boule roulante 2, sans toutefois être en contact avec celle-ci.

L'aimant 23 peut être fixe par rapport au manche 1 ou monté sur un contacteur ayant une partie fixe 27 et un poussoir 26 à faible déplacement par exemple. Le poussoir 26 est maintenu solidaire de l'aimant 23 par une liaison collée 24 par exemple. Ce système permet notamment de cliquer la boule roulante et de valider ainsi sur écran des commandes ou des choix de menu par exemple. Par ailleurs, le contacteur 26, 27 peut être monté directement sur un circuit imprimé 25. Ce circuit imprimé 25 peut contenir les composants nécessaires à la mise en forme des signaux issus du dispositif de détection des mouvements de rotation de la roue, il peut aussi éventuellement contenir certains circuits de traitement de ces signaux.

La figure 5 présente une vue en perspective d'un organe de commande selon l'invention dont la boule roulante 2 est recouverte d'une protection 34. Cette protection 34 peut être constituée par exemple d'un cylindre souple prenant à ses extrémités la forme de la boule roulante 2 et du doigt de l'opérateur. Il peut être en caoutchouc ou élastomère par exemple. Cette protection 34 est notamment nécessaire pour les cas ou l'organe de commande, particulièrement le mécanisme associé à la boule roulante, est utilisé dans un environnement à forte teneur en sable, poussière ou boue par exemple, où même dans un environnement sévère tel que nucléaire, bactériologique ou chimique notamment.

Outre une boule roulante 2, d'autres moyens de commande peuvent éventuellement être disposés sur le manche 1.

L'organe de commande selon l'invention, principalement constitué du manche 1, de la boule roulante 2 et des moyens de détection et de maintien de cette dernière, peut transmettre les informations de commande à un dispositif de traitement et d'asservissement par exemple, par l'intermédiaire d'une liaison par fil ou d'une liaison optique, radio et infra-rouge notamment, et même par une liaison par ultra-son.

L'organe de commande selon l'invention, grâce aux mouvements de rotation de la boule roulante 2 et de la possibilité de cliquer celle-ci d'une part, grâce à un organe tel qu'un viseur de casque par exemple pouvant afficher des menus déroulant d'autre part, évite à la fois l'utilisation de claviers et d'écran pour le positionnement et l'asservissement de système mobiles commandables.

## Revendications

1. Organe de commande manuelle à distance, caractérisé en ce qu'il est constitué au moins d'une boule roulante (2) logée en partie dans un manche (1) contenant des moyens de détection (6, 7, 10, 11, 14, 15, 16, 17) des mouvements de la boule roulante, le manche (1) étant fixe de manière à servir de point d'appui.

2. Organe de commande selon l'une quelconque des revendications précédentes, caractérisé en ce que la boule roulante (2) a un mouvement de rotation suivant au moins un axe.

3. Organe de commande selon l'une quelconque des revendications précédentes, caractérisé en ce qu'il comporte des moyens permettant de cliquer la boule roulante (2).

4. Organe de commande selon l'une quelconque des revendications précédentes, caractérisé en ce que la boule roulante (2) a un noyau métallique.

5. Organe de commande selon l'une quelconque des revendications précédentes caractérisé en ce que les moyens de détection des mouvements de la boule roulante comportent des cylindres (6, 7), des roues codeuses (10, 11), des éléments de captage (14, 15) et des lignes de transmission (16, 17), les axes de symétries (12, 13) des cylindres (6, 7) étant perpendiculaires entre eux et situés dans le plan formé par les axes de rotation (8, 9) de la boule roulante (2), les cylindre (6, 7) étant en contact tangentiel avec la boule roulante (2) et reliés aux roues codeuses (10, 11), lesquelles transmettent des signaux optiques, images des mouvements de la boule roulante (2), aux éléments de captages (14, 15) reliés aux lignes de transmission (16, 17).

6. Organe de commande selon la revendication 5, caractérisé en ce que les roues codeuses (10, 11) sont recouvertes de secteurs réfléchissant et de secteurs non réfléchissant.

7. Organe de commande selon la revendication 5, caractérisé en ce que les éléments de captage (14, 15) émettent des signaux optiques vers les roues codeuses (10, 11).

8. Organe de commande selon la revendication 5, caractérisé en ce qu'un cylindre (18) couplé à un ressort (20) maintient la boule roulante (2) en contact avec les cylindres (6, 7) de détection.

9. Organe de commande selon l'une quelconque des revendications précédentes, caractérisé en ce que la boule roulante (2) est maintenue dans le manche (1) par la force magnétique exercée par un aimant (23) placé à l'intérieur du manche (1).

10. Organe de commande selon la revendication 9, caractérisé en ce que les moyens permettant de cliquer sont constitués par un contacteur (26, 27), l'aimant (23) étant monté sur le contacteur (26, 27) qui a une partie fixe (27) par rapport au manche (1) et un poussoir (26) maintenu solidaire de l'aimant (23).

11. Organe de commande selon les revendications 9 et 10, caractérisé en ce que le contacteur (26, 27) est monté directement sur un circuit imprimé (25) à l'intérieur du manche (1).

12. Organe de commande selon l'une quelconque des revendications précédentes, caractérisé en ce que la boule roulante (2) est recouverte d'une protection (34).

13. Organe de commande selon la revendications 12, caractérisé en ce que la protection (34) de la boule roulante (2) est en caoutchouc.

14. Organe de commande selon la revendication 12, caractérisé en ce que la protection (34) de la boule roulante (2) est en matériau élastomère.
